**Europäisches Patentamt**

**European Patent Office**

**Office européen des brevets**

(19)

(11) Veröffentlichungsnummer: **0 015 415**
**B1**

(12) **EUROPÄISCHE PATENTSCHRIFT**

(45) Veröffentlichungstag der Patentschrift: **05.01.83**

(21) Anmeldenummer: **80100739.4**

(22) Anmeldetag: **14.02.80**

(51) Int. Cl.³: **B 21 D 43/05,**
**B 23 Q 41/02, B 65 G 47/31**

(54) Werkstücktransporteinrichtung.

(30) Priorität: **06.03.79 DD 211416**

(43) Veröffentlichungstag der Anmeldung:
**17.09.80 Patentblatt 80/19**

(45) Bekanntmachung des Hinweises auf die Patenterteilung:
**05.01.83 Patentblatt 83/1**

(84) Benannte Vertragsstaaten:
**DE FR GB IT**

(56) Entgegenhaltungen:
DE - A - 1 431 372
DE - A - 1 777 355
DE - A - 1 807 943
DE - A - 2 209 233
DE - A - 2 253 632
DE - A - 2 346 407
DE - A - 2 544 499
FR - A - 2 231 447
US - A - 3 373 860

(73) Patentinhaber: VEB Kombinat Umformtechnik
"Herbert Warnke" Erfurt
Schwerborner Strasse 1
5010 Erfurt (DD)

(72) Erfinder: Schmidt, Gerhard
Leipziger Strasse 118
502 Erfurt (DD)
Erfinder: Triess, Matthias
Geraer Strasse 24
508 Erfurt (DD)
Erfinder: Ackert, Jürgen
Chamissostrasse 16
508 Erfurt (DD)
Erfinder: Leuschner, Peter
Willy-Albrecht-Ring 60
506 Erfurt (DD)
Erfinder: Keller, Berthold
Klingenstrasse 5
508 Erfurt (DD)
Erfinder: Schultz, Wolfgang
Lowetscher Strasse 1/101
506 Erfurt (DD)

(74) Vertreter: Lehn, Werner, Dipl.-Ing. et al,
Hoffmann, Eitle & Partner Patentanwälte
Arabellastrasse 4 (Sternhaus)
D-8000 München 81 (DE)

## Werkstücktransporteinrichtung

Die Erfindung betrifft eine Werkstücktransporteinrichtung gemäß Oberbegriff von Patentanspruch 1, die insbesondere zwischen benachbarten Pressen einer Pressenstraße angeordnet ist und durch welche die von der Entnahmeeinrichtung der vorhergehenden Presse der Beladestation der Werkstücktransporteinrichtung übergebenen Werkstücke einer Entnahmestation zugeführt werden, wo sie von der Zuführeinrichtung der Folgepresse entnommen werden.

Es sind bereits zahlreiche Einrichtungen zum Transport von Werkstücken zwischen benachbarten Pressen einer Pressenstraße bekannt, wie z.B. in den DE—A—16 02 570, 15 52 032, 17 77 355, 22 09 233 bzw. der DE—B—12 54 076 beschrieben.

Bei einer bekannten Einrichtung dieser Art gemäß DE—B—12 54 076 ist ein in Schienen geführter und mit Greiferzangen versehener Wagen angeordnet, der mit Hilfe eines kontinuierlich umlaufenden Kettentriebes zwischen zwei Stationen hin- und herbewegbar und über einen zweiten Kettentrieb anheb- bzw. absenkbar ist.

Bei einer anderen bekannten Einrichtung gemäß DE—A—17 77 355 ist zwischen den Pressen ein Förderband bzw. eine Förderkette angeordnet, welche mit der jeweiligen Werkstückform angepaßten Aufnahmetaschen versehen ist und direkt von der vorhergehenden oder der nachfolgenden Presse über ein Schrittschaltgetriebe intermittierend angetrieben wird.

Die Verwendung derartiger Werkstücktransporteinrichtungen setzt einen sehr genauen Synchronlauf aller Pressen einer Pressenstraße voraus, d.h. es dürfen nur sehr geringe, genau abgegrenzte Winkelabweichungen bezüglich der Phasenlage der einzelnen Pressen zueinander auftreten. Das bedingt einen sehr hohen steuerungstechnischen Aufwand für die Pressensteuerung, wie z.B. den Einsatz thyristorgesteuerter 4-Quadrantenantriebe und deren Steuerung mit Hilfe eines zusätzlichen Leitaggregates. Ein weiterer Nachteil ist in der geringen Flexibilität und dem hohen Wartungsaufwand vollsynchronisierter Pressenstraßen zu sehen.

Bei einer weiteren bekannten Einrichtung gemäß DE—A—22 09 233 sind zwischen den Pressen mit einem eigenen Antrieb versehene, intermittierend antreibbare Förderer angeordnet, deren Fördervorgang jeweils durch die Werkstücke selbst steuerbar ist. Dabei handelt es sich um eine relativ einfache Folgesteuerung. Durch ein Signal, ausgelöst durch ein von der Entnahmeeinrichtung der Presse auf den Förderer abgelegtes Werkstück, wird derselbe in Betrieb gesetzt. Sobald ein Werkstück die Übergabestation des Förderers erreicht hat, wird durch ein Signal der Förderer stillgesetzt und die Zuführeinrichtung der Folgepresse betätigt. Nach Eingabe des Werkstücks in die Presse wird durch ein Signal der Zuführeinrichtung der Hub der Presse ausgelöst.

Durch diese Lösung wird der Steuerungsaufwand für die Pressenstraße wesentlich verringert und eine größere Flexibilität gegenüber den vorstehend genannten Lösungen erreicht. Das bedeutet aber auch gleichzeitig, daß die einzelnen Pressen der Pressenstraße nur im Einzelhub betrieben werden können und nach jedem Hub wieder stillgesetzt werden müssen, da der Hub jeder Folgepressen erst dann ausgelöst wird, wenn durch ein Signal der Zuführeinrichtung das Vorhandensein eines Werkstücks angezeigt wird. Eine derartige Betriebsweise führt zu sehr hohen Belastungen der Pressenantriebe, insbesondere der Kupplungen und Bremsen, verbunden mit einer großen Lärmentwicklung und einer geringen Mengenleistung der Pressenstraße.

Bekannt ist auch eine Einrichtung taktlosen Fördern von Werkstücken zwischen Bearbeitungsmaschinen gemäß DD—A—126 679, bei der in Schienen eines Gestelles geführte Wagen angeordnet sind, welche über einen kontinuierlich umlaufenden Kettentrieb unter Wirkung der Reibungskräfte angetrieben werden. An jeder Maschine oder Kontrollstation kann ein Wagen durch einen beweglichen Anschlag, der von einem die Maschine speisenden Manipulator oder einem anderen Außensignal gesteuert wird, gestoppt und fixiert werden. Der bewegliche Anschlag verhindert somit die Bewegung des ersten, an ihn anstoßenden Wagens, welcher seinerseits die nachfolgenden Wagen stoppt, so daß sich hinter dem fixierten Wagen eine Zwischenoperationsreserve aus einer bestimmten Anzahl von mit Werkstücken beladenen Wagen bildet. Nach dem Entladen werden die Wagen unterhalb der Transportebene wieder zur Beladestation der Fördereinrichtung zurückgeführt.

Ein Mangel dieser Einrichtung besteht in dem Antrieb der Wagen über einen kontinuierlich umlaufenden Kettentrieb mittels Reibschluß. Durch den Reibschluß kann nur eine relativ geringe Antriebskraft von den Kettentrieben auf die Wagen übertragen werden, da sonst während der Haltezeiten der Wagen die Reibung zwischen den jeweils stillstehenden Wagen und den ständig umlaufenden Kettentrieben zu groß wird. Das führt zu einer sehr unsicheren Kraftübertragung, so daß nur sehr geringe Beschleunigungswerte der Wagen erreichbar sind und keine exakten Vorschubzyklen möglich sind.

Ein weiterer Mangel besteht darin, daß die Wagen an den vorgesehenen Haltepunkten mit der vollen Transportgeschwindigkeit auf die Anschläge bzw. aufeinander auffahren, so daß die Transportgeschwindigkeit der Wagen begrenzt werden muß, um die Stöße und Erschütterungen beim Auffahren der Wagen innerhalb vertretbarer Grenzen zu halten und ein Herausschleudern der Teile aus den Wagen zu verhindern. Moderne Pressen zur Metallbearbeitung arbeiten in der Regel mit sehr großen Hubzahlen, beispielsweise bis zu 40 Hüben/Minute, so daß eine derartige Einrichtung auf Grund der unsicheren Kraftübertragung und der sehr niedrigen erreichbaren Transportgeschwindigkeit zum Transport von Werkstükken zwischen benachbarten Pressen einer Pressenstraße nicht anwendbar ist.

Durch die DE—A—2-253 632 ist schließlich ein Übergabegerät für medizinische Artikel bekannt geworden, das als Verbindungsteil zwischen einer Verpackungsmaschine und einer Kartoniermaschine angeordnet ist sowie aus einem Aufnahmeteil, einem Übergabeteil und einem Abgabeteil besteht. Als Transportbehälter für das verpackte und zu kartonierende Gut werden dabei Becher verwendet, die auf ihrer Führung in Transportrichtung gegeneinander verschiebbar sind und deren Bewegung nur im Aufnahmeteil und Abgabeteil zwangsgesteuert ist. Das Übergabeteil wird gleichzeitig für die beladenen und die entladenen Becher als Staustrecke verwendet, um die unterschiedliche Arbeitsweise der benachbarten Maschinen auszugleichen. Als Antriebsvorrichtung im Übergabeteil für die Becher werden Schlepp- und Schleifbänder verwendet.

Der Mangel dieser Einrichtung besteht darin, daß die Becher mittels den Schlepp- und Schleifbändern zwar normalerweise gleichmäßig vorwärts transportiert werden, aber bei einer Stauung fahren die Becher auf den bzw. die vorgelagerten auf und es kommt somit zu Stößen und Rucken. Dadurch kommt es beim Transport von großflächigen Blechteilen mit großer Masse mit einem derartigen Übergabegerät zu Verlagerungen gegenüber den Aufnahmebehältern. Ein weiterer Mangel dieser Lösung ist in dem Antrieb der Becher mittels Reibschluß durch einen kontinuierlich umlaufenden Riementrieb zu sehen. Durch den Reibschluß kann nur eine relativ geringe Antriebskraft vom Riementrieb auf den Becher übertragen werden, da sonst während der Haltezeiten der Becher die Reibung zwischen den jeweils stillstehenden Bechern und dem ständig umlaufenden Riementrieb zu groß wird. Das führt zu einer sehr unsicheren und unzureichenden Kraftübertragung, so daß nur sehr geringe Beschleunigungswerte der Becher erreichbar und keine exakten Vorschubzyklen möglich sind.

Der Erfindung liegt die Aufgabe zugrunde, eine Werkstücktransporteinrichtung zwischen benachbarten Pressen einer Pressenstraße so zu gestalten, daß ein sicherer, stoßfreier Transport der Werkstücke mit einer relativ hohen Durchschnittsgeschwindigkeit und genau festgelegten Taktwegen von einer Beladestation über eine oder mehrere Zwischenstationen zu einer Entnahmestation gewährleistet ist.

Diese Aufgabe wird mit einer Werkstücktransporteinrichtung, die eine Beladestation und eine Entnahmestation aufweist, welche Maschinen mit unterschiedlicher Taktzeit zugeordnet sind, wobei in der Werkstücktransporteinrichtung Schienen und darin geführte Wagen mit Aufnahmetaschen vorgesehen sind, welche nacheinander von der Beladestation zur Entnahmestation verschiebbar und unterhalb der Transportebene in entgegengesetzter Richtung zurückführbar sind, die Transporteinrichtung bezüglich ihres Antriebes steuerbar ist und zwischen der Beladestation und der Entnahmestation eine oder mehrere Zwischenstationen aufweist, die eine Speicherfunktion erfüllen, und zum Antrieb der Wagen von einer Station zur nächsten Station jeweils separate, unabhängig voneinander schaltbare Antriebe angeordnet sind, erfindungsgemäß dadurch gelöst, daß die umlaufenden Wagen aus einzelnen gelenkig miteinander verbundenen Gliedern bestehen und mit Mitnehmergabeln versehen sind, daß die einzelnen Antriebe über Schrittgetriebe mit umlaufenden Kettentrieben mit Mitnehmerbolzen für den Eingriff in die Mitnehmergabeln in Wirkverbindung stehen, und daß an den vorgesehenen Übergabepunkten der Wagen in den jeweiligen Stationen Arretierungen, bestehend aus unter Federdruck in entsprechende Vertiefungen der Wagen einrastenden Rollen, angeordnet sind.

Vorteilhaft sind dabei die Antriebe an den Seitenwänden des Gestelles, welches die Schienen enthält, befestigt.

Durch die erfindungsgemäße Lösung entsteht der Vorteil, daß großflächige Blechteile durch formschlüssige Mitnehmerelemente funktionssicher bewegt werden und damit verbunden die erforderlichen hohen Beschleunigungs- und Verzögerungskräfte auf die Transportwagen übertragen werden können.

Die Erfindung soll nachstehend an einem Ausführungsbeispiel näher erläutert werden. In den zugehörigen Zeichnungen zeigen:

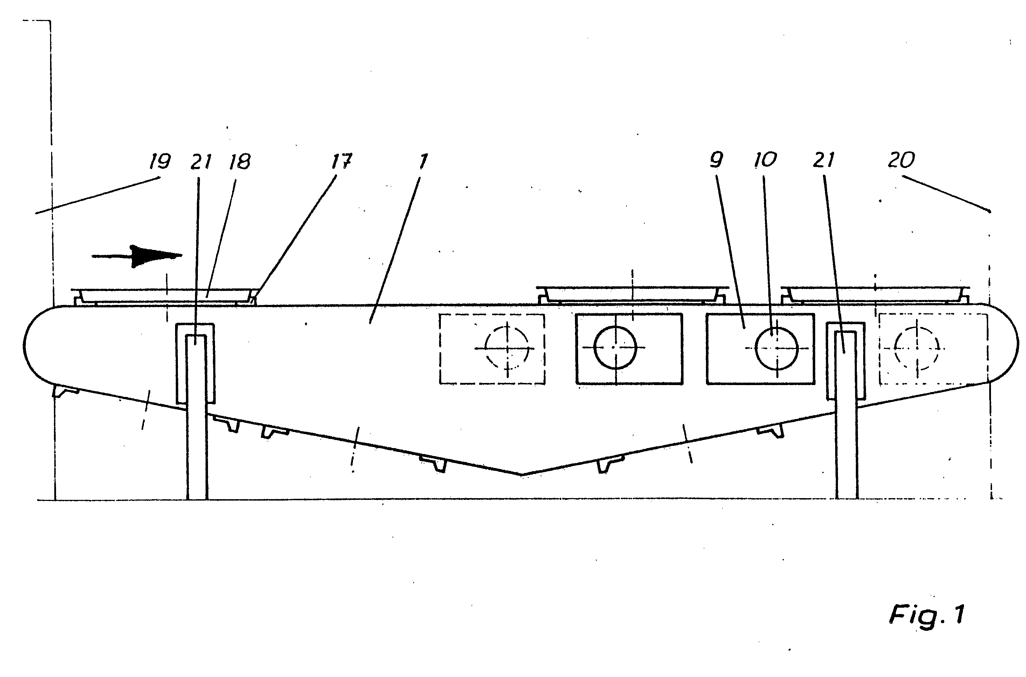

Fig. 1 eine zwischen zwei Pressen angeordnete Werkstücktransporteinrichtung in der Seitenansicht

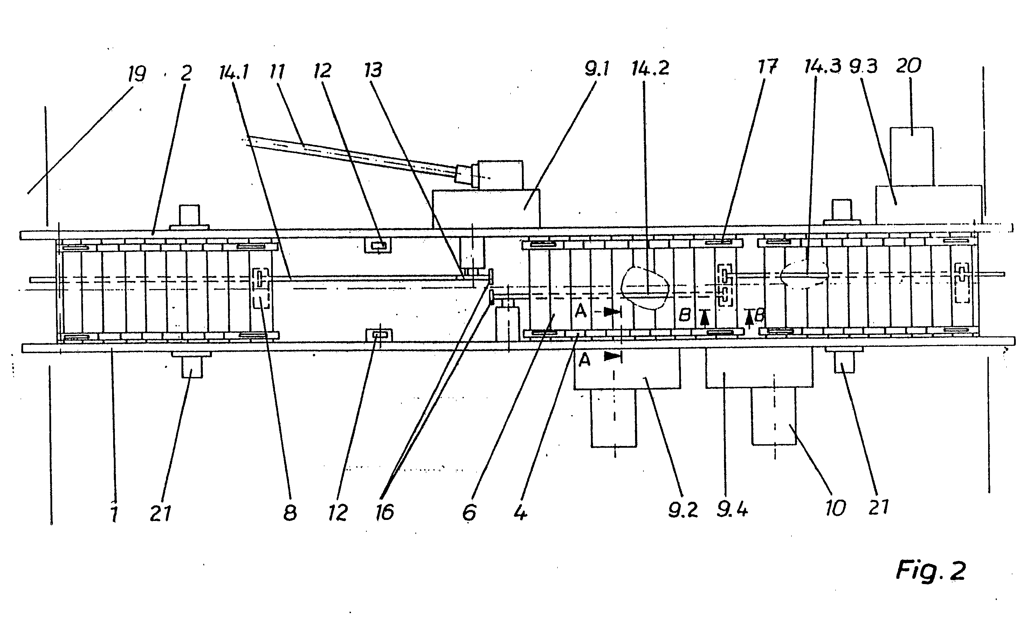

Fig. 2 die Draufsicht nach Fig. 1

Fig. 3 den Schnitt A—A nach Fig. 2

Fig. 4 den Schnitt D—D nach Fig. 3

Fig. 5 den Schnitt B—B nach Fig. 2

Fig. 6 den Schnitt C—C nach Fig. 5

Fig. 7 die Anordnung der Kettentriebe

Fig. 8.1—8.8 die schematische Darstellung verschiedener Phasen des Wagenumlaufes.

Bei einer vorteilhaften Ausführung der Werkstücktransporteinrichtung sind an den Seitenwänden 1 und 2 des Gestelles umlaufende Schienen 3 angeordnet, in denen sechs aus mehreren Gliedern 4 und Querstreben 5 bestehende Wagen 6 auf Rollen 7 geführt sind. Auf den Wagen 6 sind auswechselbare, der jeweiligen Werkstückform angepaßte Aufnahmetaschen 17 für die Aufnahme der Werkstücke 18 vorgesehen. Das Gestell der Werkstück-

transporteinrichtung ruht auf vier Füßen 21, die paarweise in ihrer Höhe verstellbar sind, so daß die Transporteinrichtung der Transportebene der Werkstücke in den Pressen 19 und 20 angepaßt und bei Bedarf in eine Schräglage gestellt werden kann.

Zur eindeutigen Bestimmung der jeweils betroffenen Baugruppe macht sich bei der nachfolgenden Beschreibung der Werkstücktransporteinrichtung eine besondere Kennzeichnung der einzelnen Wagen 6 mit 6.1 bis 6.6, der einzelnen Stationen 22 mit 22.1 bis 22.8, der einzelnen Schaltgetriebe 9 mit 9.1 bis 9.4, der einzelnen Kettentriebe 14 mit 14.1 bis 14.4 und der Werkstücke 18 mit 18.1 bis 18.4 erforderlich.

An den Seitenwänden 1:2 des Gestelles sind vier Schrittgetriebe 9 angeflanscht, von denen wahlweise das erste Schrittgetriebe 9.1 direkt von der vorhergehenden Presse 19 über eine Gelenkwelle 11 angetrieben wird. Die übrigen Schrittgetriebe 9.2 bis 9.4 sind mit separaten Antrieben 10 versehen, die durch eine hier nicht näher beschriebene Steuereinrichtung unabhängig voneinander schaltbar sind.

Selbstverständlich könnte auch das erste Schrittgetriebe 9.1, analog der übrigen Schrittgetriebe 9.2 bis 9.4, mit einem eigenen Antrieb 10 versehen sein.

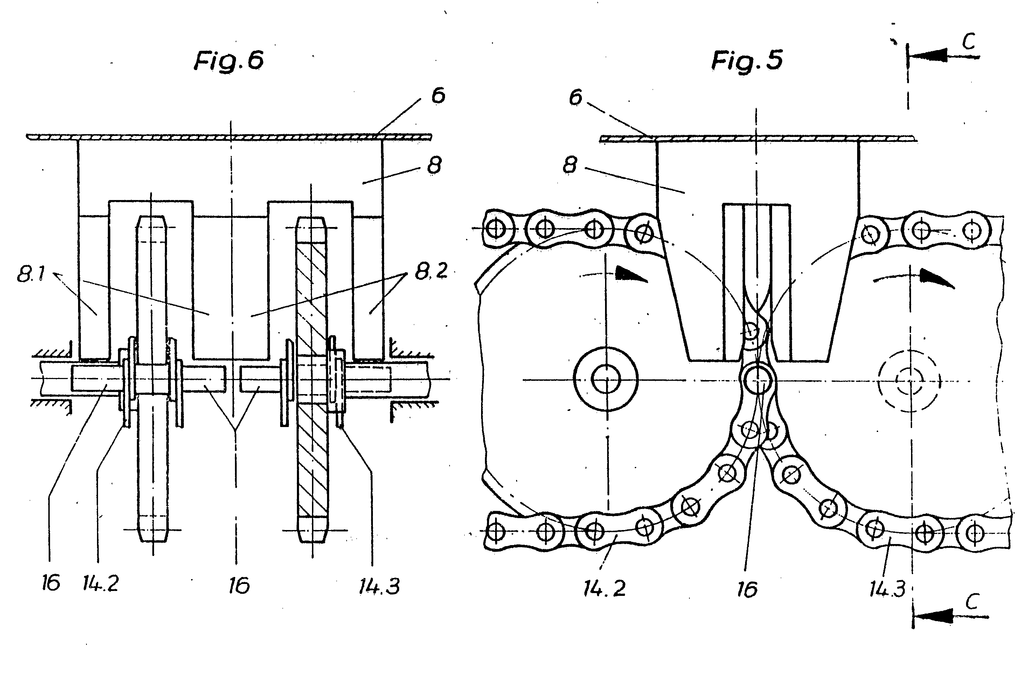

Die Ausgangswellen der Schrittgetriebe sind mit Kettenrädern 13 verbunden, durch die die über Umlenk- und Spannkettenräder 15 umlaufenden Kettentriebe 14 intermittierend angetrieben werden. Jeder Kettentrieb 14 ist mit mehreren Mitnehmerbolzen 16 versehen, die jeweils während einer bestimmten Phase des Kettenumlaufes in die an den Wagen 6 angeordneten Mitnehmergabeln 8 eingreifen (Fig. 5 und 6).

Die Mitnehmergabeln 8 sind doppelt ausgebildet und so an den Wagen 6 angeordnet, daß die Mitnehmerbolzen 16 der seitlich versetzt angeordneten Kettentriebe 14 abwechselnd in die rechten Schlitze 8.2 bzw. linken Schlitze 8.1 der Mitnehmergabeln 8 eingreifen.

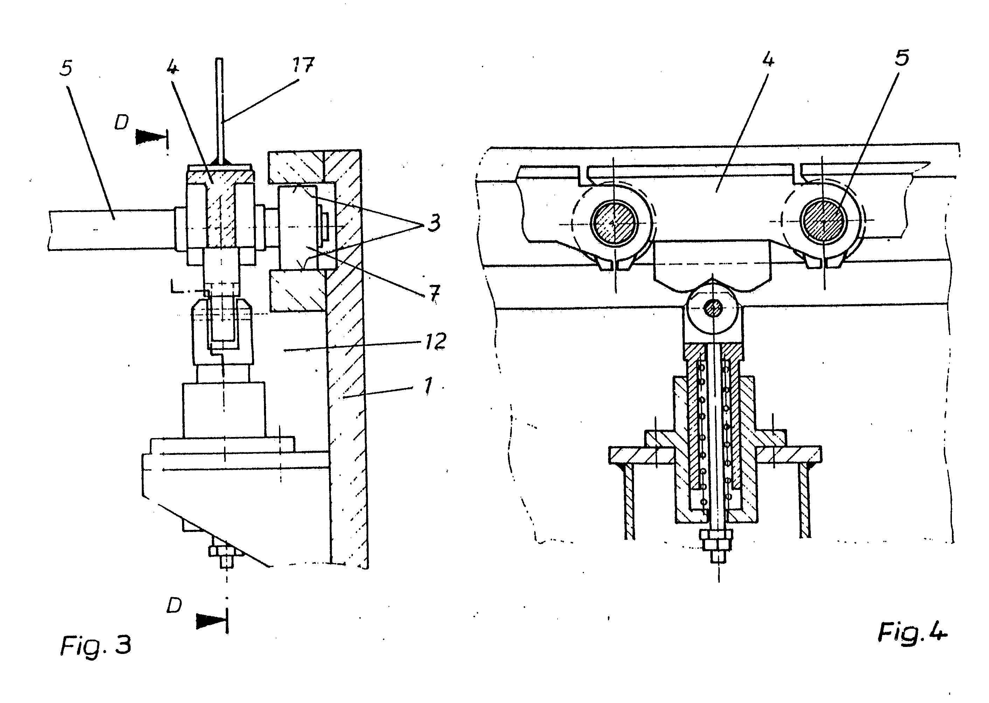

Hat beispielsweise einer der Wagen 6 den vorgesehenen Übergabe- und Haltepunkt in der Station 22.3 erreicht, läuft der Mitnehmerbolzen 16 des Kettentriebes 14.2 aus dem Schlitz 8.1 der Mitnehmergabel 8 heraus, und der Kettentrieb 14.2 wird durch das dazugehörige Schrittgetriebe 9.2 stillgesetzt. Gleichzeitig wird dieser Wagen 6 durch eine Arretierung 12 (Fig. 3 und 4), bestehend aus einer unter Federdruck in eine entsprechende Vertiefung der Wagen 6 einrastenden Rolle, in seiner Position gehalten. Wird das nächstfolgende Schrittgetriebe 9.3 in Betrieb gesetzt, greift einer der Mitnehmerbolzen 16 des Kettentriebes 14.3 in den Schlitz 8.2 der Mitnehmergabel 8 ein, überwindet den Widerstand der Arretierung 12 und transportiert den betreffenden Wagen 6 zur nächsten Station 22.4 weiter. In gleicher Weise werden alle Wagen 6 schrittweise von Station zu Station weitertransportiert.

Durch den Einbau allgemein bekannter, hier nicht gesondert dargestellter Überlastsicherungen werden die Antriebe geschützt, wenn im Falle einer Störung einer der Wagen 6 blockiert ist.

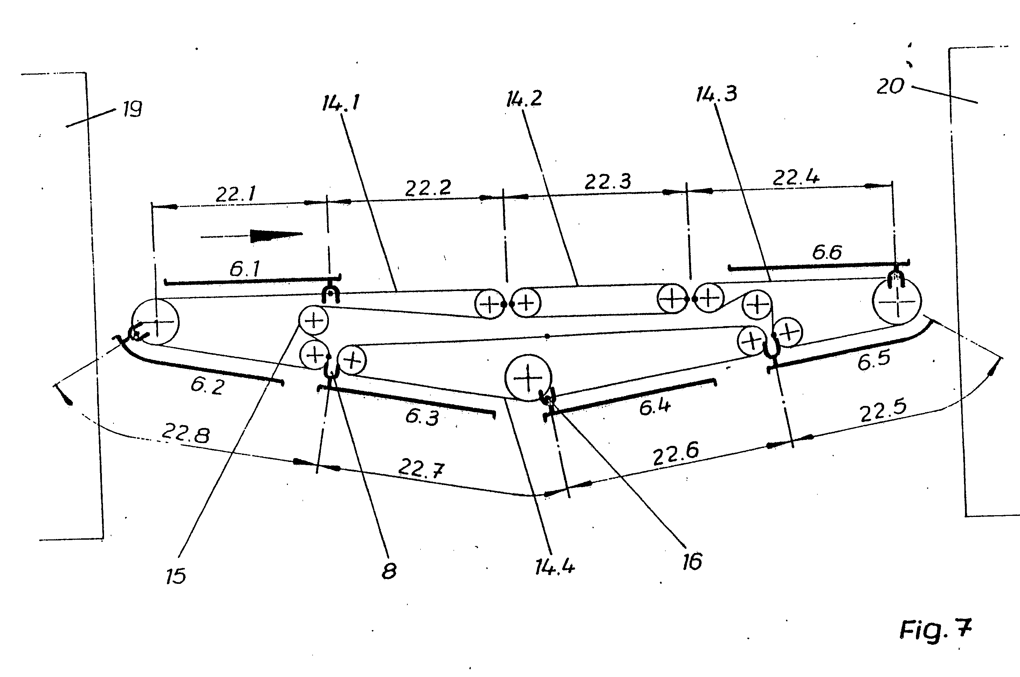

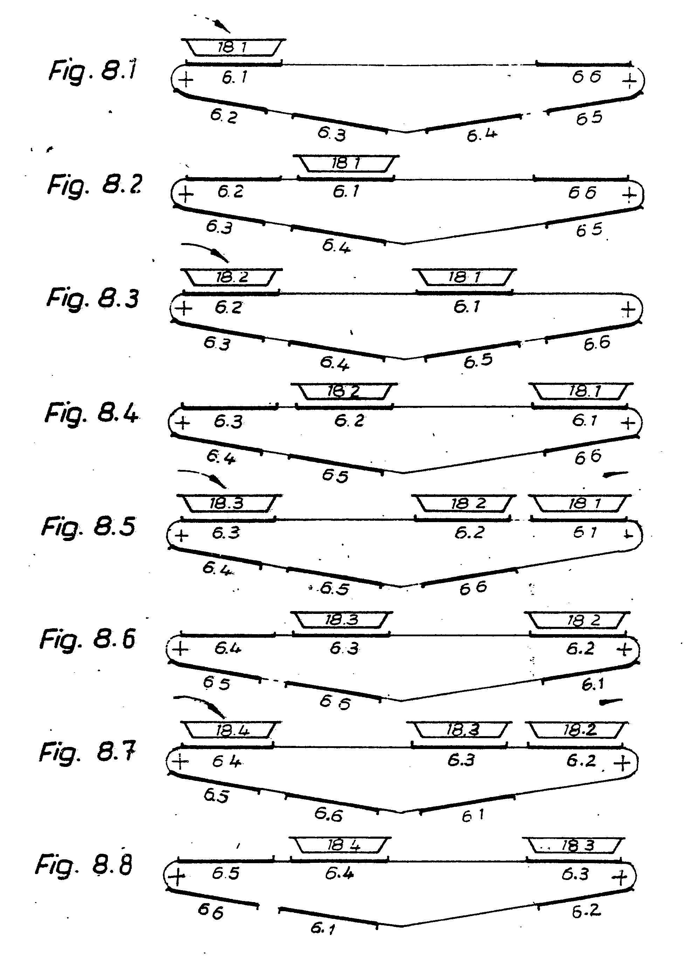

Nachstehend werden an Hand der Fig. 7 und 8 die einzelnen Phasen des Wagenumlaufes beschrieben. Als Ausgangsbedingung wird, wie in Fig. 7 dargestellt, folgende Stellung der Wagen 6 angenommen:

Wagen 6.1 befindet sich in der Beladestation 22.1,
Wagen 6.2 in der Station 22.8,
Wagen 6.3 in der Station 22.7,
Wagen 6.4 in der Station 22.6,
Wagen 6.5 in der Station 22.5,
Wagen 6.6 in der Entnahmestation 22.4.

Die Stationen 22.3 und 22.2 sind zu diesem Zeitpunkt nicht belegt.

Durch die Entnahmeeinrichtung der vorgelagerten Presse 19 wird ein Werkstück 18.1 in die Aufnahmetaschen 17 des Wagens 6.1 abgelegt (Fig. 8.1).

Durch den über die Gelenkwelle 11 und das Schrittgetriebe 9.1 direkt von der vorgelagerten Presse 19 angetriebenen Kettentrieb 14.1 wird der beladene Wagen 6.1 von der Beladestation 22.1 zur nächsten Station 22.2 gezogen. Gleichzeitig wird durch den Kettentrieb 14.1 der Wagen 6.2 von der Station 22.8 zur Beladestation 22.1 und der Wagen 6.3 von der Station 22.7 zur Station 22.8 weitertransportiert (Fig. 8.2).

Hat der Wagen 6.1 den vorgesehenen Halte- und Übergabepunkt in der Station 22.2 erreicht, wird mit Hilfe einer entsprechenden Steuereinrichtung der mit einem separaten Antrieb 10 und einem Schrittgetriebe 9.2 verbundene Kettentrieb 14.2 betätigt und transportiert ohne nennenswerten Stillstand den Wagen 6.1 zur nächsten Station 22.3. Gleichzeitig wird durch die Entnahmeeinrichtung der Presse 19 das nächste Werkstück 18.2 in die Aufnahmetaschen 17 des Wagens 6.2 abgelegt sowie der Wagen 6.5 durch den Kettentrieb 14.4 von der Station 22.5 zur Station 22.6 und der Wagen 6.6 durch den Kettentrieb 14.3 von der Entnahmestation 22.4 zur nächstfolgenden Station 22.5 weitertransportiert (Fig. 8.3).

Dieser Zyklus wiederholt sich in gleicher Weise, bis der Wagen 6.1 die Entnahmestation 22.4 erreicht hat und in einer Wartestellung stehen bleibt. Unabhängig davon werden die Wagen 6.2, 6.3, 6.4 und 6.5 jeweils um eine Station weitertransportiert (Fig. 8.4).

Zweckmäßigerweise wird der Antrieb der Folgepresse 20 erst eingeschaltet, nachdem auch der Wagen 6.2 die Station 22.3 erreicht hat und dort ebenfalls in einer Wartestellung stehen bleibt (Fig. 8.5).

Sobald das Werkstück 18.1 durch die Zuführeinrichtung der Folgepresse 20 entnommen wurde, wird der leere Wagen 6.1 sofort zur Station 22.5 weitertransportiert und gleichzeitig der nächste beladene Wagen 6.2 in der Entnahmestation 22.4 bereitgestellt (Fig. 8.6).

In den Fig. 8.7 und 8.8 sind weitere mögliche Stellungen der Wagen 6 dargestellt.

Wenn die Taktzeit des synchron von der vorgelagerten Presse angetriebenen Kettentriebes 14.1 mit 100% angenommen wird, so beträgt die Taktzeit der übrigen Kettentriebe 14.2 bis 14.4 nur ca. 40%. Damit sind die Taktzeiten der Kettentriebe 14.2 bis 14.4 wesentlich geringer als die der Pressen 19 und 20.

Wie aus den Fig. 8.1 bis 8.8 ersichtlich, können wahlweise in den Stationen 22.2 bis 22.4 mehrere mit Werkstücken 18 beladene Wagen 6 in einer Wartestellung bereitgestellt werden, wo sie von der Zuführeinrichtung der Folgepresse 20 nacheinander wieder entladen werden. Diese Stationen 22.2 bis 22.4 erfüllen damit eine Speicherfunktion, wodurch die Entnahme der Werkstücke zeitlich unabhängig von der Zuführung derselben möglich ist, so daß die Phasen- und Hubzahldifferenzen der Pressen 19 und 20 innerhalb bestimmter Grenzen ausgeglichen werden und eine genaue Synchronisation der Pressen 19 und 20 zueinander nicht erforderlich ist.

Ist die durchschnittliche Dauerhubzahl der nachfolgenden Presse 20 geringer als die der vorgelagerten Presse 19, dann sind nach einer bestimmten Laufzeit der Pressen 19 und 20 die Stationen 22.2 bis 22.4 durch mit einem Werkstück 18 beladene Wagen belegt. In diesem Fall wird entweder der Dauerhab der vorgelagerten Presse 19 kurzzeitig unterbrochen oder mit Hilfe einer geeigneten Steuereinrichtung, vorzugsweise in Form einer an sich bekannten Zweipunktregelung, die Hubzahl der vorgelagerten Presse 19 verringert und/oder die Hubzahl der nachfolgenden Presse 20 erhöht.

Ist dagegen die durchschnittliche Dauerhubzahl der nachfolgenden Presse 20 größer als die der vorgelagerten Presse 19, so befindet sich nach einer bestimmten Laufzeit der Pressen 19 und 20 kein beladener Wagen mehr rechtzeitig in der Entnahmestation 22.4, so daß der Dauerhub der nachfolgenden Presse 20 in periodischen Zeitabständen kurzzeitig unterbrochen werden muß oder die Hubzahl der vorgelagerten Presse 19 erhöht und/oder die Hubzahl der nachfolgenden Presse 20 verringert werden muß.

Selbstverständlich kann die Transporteinrichtung auch mit einer größeren oder geringeren Anzahl von Stationen 22 und Wagen 6 ausgeführt werden als im vorstehenden Ausführungsbeispiel angenommen wurde. Durch eine größere Anzahl von Stationen 22 erhöht sich auch die erreichbare Speicherwirkung der Transporteinrichtung, so daß entsprechend größere Unterschiede bezüglich Hubzahl und Phasenwinkel der einzelnen Pressen zueinander ausgeglichen werden können bzw. ein ununterbrochener Dauerhub der Pressen 19 und 20 über einen entsprechend längeren Zeitraum möglich ist.

## Patentansprüche

1. Werkstücktransporteinrichtung, die eine Beladestation (22.1) und eine Entnahmestation (22.4) aufweist, welche Maschinen (19, 20) mit unterschiedlicher Taktzeit zugeordnet sind, wobei in der Werkstückstransporteinrichtung Schienen (3) und darin geführte Wagen (6) mit Aufnahmetaschen (17) vorgesehen sind, welche nacheinander von der Beladestation (22.1) zur Entnahmestation (22.4) verschiebbar und unterhalb der Transportebene in entgegengesetzter Richtung zurückführbar sind (11), die Transporteinrichtung bezüglich ihres Antriebes steuerbar ist und zwischen der Beladestation (22.1) und der Entnahmestation (22,4) eine oder mehrere Zwischenstationen (22) aufweist, die eine Speicherfunktion erfüllen, und zum Antrieb der Wagen (6) von einer Station (22) zur nächsten Station (22) jeweils separate, unabhängig voneinander schaltbare Antriebe (10) angeordnet sind, dadurch gekennzeichnet, daß die umlaufenden Wagen (6) aus einzelnen gelenkig miteinander verbundenen Gliedern (4) bestehen und mit Mitnehmergabeln (8) versehen sind, daß die einzelnen Antriebe (10) über Schrittgetriebe (9) mit umlaufenden Kettentrieben (14) mit Mitnehmerbolzen (16) für den Eingriff in die Mitnehmergabeln (8) in Wirkverbindung stehen, und daß an den vorgesehenen Übergabepunkten der Wagen (6) in den jeweiligen Stationen (22.2; 22.3; 22.5; 22.7) Arretierungen (12), bestehend aus unter Federdruck in entsprechende Vertiefungen der Wagen (6) einrastenden Rollen, angeordnet sind.

2. Werkstücktransporteinrichtung nach Anspruch 1, dadurch gekennzeichnet, daß die Antriebe (10) an den Seitenwänden (1, 2) des Gestelles, welches die Schienen (3) enthält, befestigt sind.

## Revendications

1. Dispositif de transport de pièces comportant une station de chargement (22.1) et une station de prélèvement (22.4) affectées à des machines (19, 20) à cadences de production différentes, étant prévus, dans le dispositif, des rails (3) et, guidés dans ces derniers, des chariots (6) à poches réceptrices (17) qui sont successivement déplaçables en translation de la station de chargement (22.1) à la station de prélèvement (22.4) et ramenables en sens opposé au-dessous du plan de transport, ledit dispositif de transport étant commandable quant à son entraînement et comportant, entre la station de chargement (22.1) et la station de prélèvement (22.4), une ou plusieurs stations (22) intermédiaires à fonction d'accumulation et des systèmes d'entraînement (10) chaque fois séparés et actionnables indépendamment les uns des autres étant là pour l'entraînement desdits chariots (6) d'une station (22) à la suivante, dispositif de transport de pièces caractérisé par le fait que les chariots tournants (6) se composent de divers membres (4) articulés entre eux et sont munis de fourches d'entraînement (9), que les divers systèmes d'entraînement (10) coopèrent, par des commandes pas à pas (9), avec des commandes tournantes à chaîne (14) comportant des broches d'entraînement (16) pour venir en prise dans les fourches d'entraînement (8) et que des organes d'arrêt (12) composés de gálets s'enclenchant sous l'action de ressorts dans des évidements correspondants des chariots (6) sont placés aux points de transfert prévus pour les chariots (6) dans diverses stations (22.2, 22.3, 22.5, 22.7).

2. Dispositif de transport de pièces selon la revendication 1, caractérisé par le fait que les systèmes d'entraînement (10) sont fixés aux parois latérales (1, 2) du bâti qui renferme les rails (3).

**Claims**

1. Transport device for work pieces having a loading station (22.1) and an unloading station (22.4) which are allocated to machines (19, 20) operating at different timings, rails (3) and wagons (6) with receptacle pockets (17) guided therein being provided in said transport device for work pieces, which are consecutively movable from the loading station (22.1) to the unloading station (22.4) and can be returned in the opposite direction below the transport level, the transport device being controllable with respect to its drive and having between the loading station (22.1) and the unloading station (22.4) one or more intermediate stations (22), which perform a storage function and respective separate and independently operable drives (10) being arranged for driving the wagons (6) from one station (22) to the next station (22), characterised in that the circulating wagons (6) consist of individually articulated interconnected members (4) and are provided with dog forks (8), that the individual drives (10) are operatively connected with dog bolts (16) for engagement in the dog forks (8), and that on the intended delivery points of the wagons (6) in the respective stations (22.2, 22.3, 22.5; 22.7) catches (12) are provided, consisting of rolls which under spring tension engage in corresponding recesses in said wagons (6).

2. Transport device for work pieces according to claim 1, characterised in that the drives (10) are secured on the side walls (1, 2) to the frame which contains the rails (3).

Fig. 1

Fig. 2

Fig. 3

Fig. 4

0015415

3

Fig. 5

Fig. 6

Fig. 7

0015415

Fig. 8.1

Fig. 8.2

Fig. 8.3

Fig. 8.4

Fig. 8.5

Fig. 8.6

Fig. 8.7

Fig. 8.8